# EUROPEAN PATENT APPLICATION

(11) **EP 0 607 466 A1**
(43) Date of publication of application: **27.07.1994**
(21) Application number: 92500167.9
(22) Date of filing: 18.12.1992
(51) Int. Cl.: G01N 3/40, G01N 3/06

(54) **Automatic system to measure hardness or microhardness using a load cell and image analysis**

(71) Applicant: Las Navas Garcia, José Maria, E-28210 Madrid (ES)
(72) Inventor: Las Navas Garcia, José Maria, E-28210 Madrid (ES)

(57) **Abstract**

The stepper motor (1) controlled by the personal computer (PC) moves upwards the microscope table (2) pushing the sample (3) against the penetrator (4) placed in the load cell (5), the PC is measuring in real time the force exercised by the table (2).

The load cell (5) reaches the load (weight) predefined, the stepper motor (1) maintains this force.

The indentation created (with a known weight) is now presented by the automatic motorised table (6) below the microscope objective.

The personal computer commands the Frame Grabber to collect through the video camera (7) the indentation image and then calculates the area.

The personal computer calculates the hardness values as a function of the load (weight) applied and the total area of the indentation.

## Description

Presently, to meassure microhardness on metallic samples by the methods Brinell, Vickers or Rockwell, it is necessary to place a known weight on top of a ball or diamond to create an indentation, this indentation is later meassure by optical means to calculate the area and then the hardness.

The invention I am patenting creates the indentation by moving the sample against the indentor, this indentor is fixed to a load cell and as we increase the pressure the load cell is sending a signal to the computer proporcional to the load applied.

When we reach a load (weight) iqual to the value predefined we stop pressing the sample against the load cell.

With a simple load cell we have eliminated all the mechanics asociated with a conventional microhardness tester.

Aditionally, conventional microhardness testers only have 6-8 weights, for example 10,25,50,100,200,500,1000 grams, our load cell system can apply any load from 5 grams to 2000 grams and can also vary the load from one penetration to the next without human intervention.

The invention I am patenting is made of 6 parts:
1º- Conventional microscope
2º- Load cell
3º- Device to move up and down the microscope table
4º- Video Camera and Frame Grabber
5º- Personal Computer
6º- Motorized Table Axis X Y

### APPLICATIONS AND ADVANTAGES

The invention I am patenting , has a weight range superior to any of the products on the market.

The invention I am patenting makes multiple microhardness meassurements easy to perform and totally automatic.

The invention I am patenting is faster than any meassurements made by conventional methods : 8-10 seconds per indentation.

The invention I am patenting is less expensive to produce and manufacturate than any of the products available.

The invention I am patenting when installed in a microscope, expands the use of the microscope (using the proper software) to perform image analysis of metalic structures.

This invention permits diferents weights to be applied in a secuence of penetrations totally automatic, this is not possible with present systems.

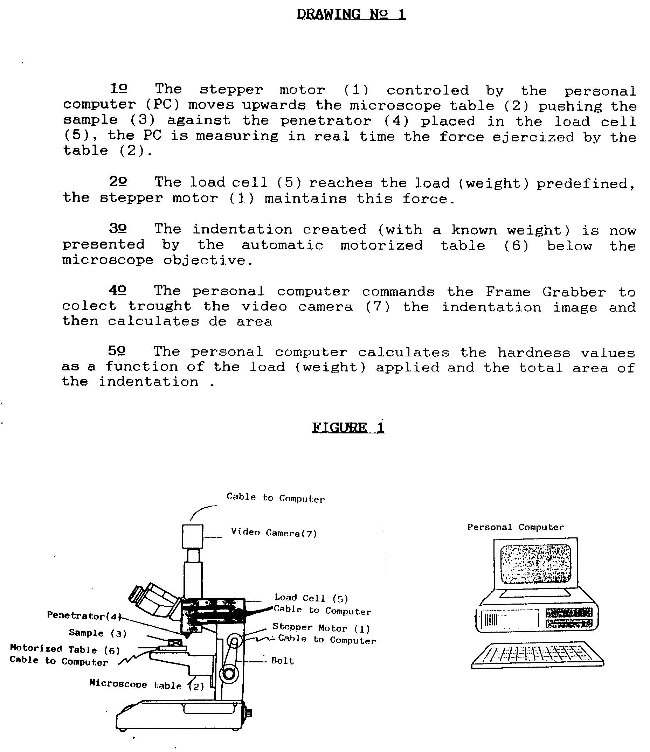

## Claims

1. Automatic system to meassure hardness or microhardness using a load cell with an indentor to create the indentation and a image analysis hardware and software to meassure the indentation area and then produce the hardness values.

## Amended claims

### Amended claims in accordance with Rule 86(2) EPC.

A method of measuring a characteristic at the surface of a sample, comprising: moving a sample surface upwards into engagement wiht the sample surface penetrator which is conected to a load cell, de load cell generating signals proportional to a force being exerted on the load cell by the penetrator;
Moving the sample surface with respect to the penetrator until a preselected force is reached between the penetrator as measured by the load cell, and the sample surface, the preselected force being sufficiently high so that the penetrator produces and indentation in the sample surface; and measuring the indentation in the sample surface as a measurement of the characteristic.

A method according to claim 1, including removing the sample from the penetrator after the preselected force has been reached, moving the sample surface to bring the indentation into alignment wiht optical measuring means, and measuring the indentation using optical measuring means.

A method according to claim 2, including placing the sample onto a stage of a microscope moveable in at least one horizontal direction, and moving the sample surface into engagement with the penetrator, by positioning the stage on a vertically moveable table of a microscope, the method including mounting the load cell to a frame of a microscope at a fixed location with respect to the stage and table.

A method according to claim 1, wherein the surface characteristic comprises the hardness of the sample surface.

An apparatus for measuring the surface characteristic of a sample comprising: a load cell;
a penetrator conected to the load cell and adapted for engaging and penetrating the sample surface;
table means for carrying a sample with a sample surface facing the penetrator;
drive means operativly conected to move the table means with respect to the penetrator for engaging the penetrator with the sample surface;
signal processing means connected to the drive means for moving the table means with respect to the penetrator until a preselected force sufficient to cause the penetrator to make an indentation in the sample surface, has been reached; and means for measuring the indentation as a measure of the characteristic.

An apparatus according to claim 5, wherein the indentation measuring means comprises optical means for optically measuring the indentation.
